# EUROPEAN PATENT SPECIFICATION

(11) **EP 1 950 028 B1**
(45) Date of publication and mention of the grant of the patent: **17.03.2010**
(21) Application number: 07250272.7
(22) Date of filing: 23.01.2007
(51) Int. Cl.: B29C 49/00, B32B 27/08, B32B 27/32, C08L 23/02

(54) **Use of an anhydride functionalized polymer to broaden the processing window of polypropylene**
Einsatz von einem Anhydrid-funktionalisierten Polymer zur Verbreiterung des Verarbeitungsfensters von Polypropylen
Utilisation d'un polymère d'anhydride fontionnalisé pour l'élargissement de la fenêtre de traitement de polypropylène

(43) Date of publication of application: 30.07.2008
(73) Proprietor: Borealis Technology Oy, 06101 Porvoo (FI)
(72) Inventor: Oysaed, Harry, 3960 Stathelle (NO); Johansen, Geir Morten, 3943 Porsgrunn (NO); Lindahl, Ann Kristin, 3912 Porsgrunn (NO); Wachholder, Max, 4310 Mauthausen (AT)
(74) Representative: Campbell, Neil Boyd

(56) References cited:
- EP-A- 1 116 571
- EP-A1- 1 136 252
- WO-A-96/19535
- WO-A-03/035368
- US-A- 5 846 661
- US-A1- 2006 020 086

## Description

This invention relates to the use of a particular polypropylene based polymer composition to broaden the processing window of propylene polymers in an injection stretch blow moulding (ISBM) process. In addition, the invention concerns a mixture of particular propylene polymers and certain anhydride modified block copolymers to form articles having broad processing windows and excellent interlayer adhesion.

The ISBM process is well known in the art and involves producing a preform by injection moulding followed by stretching and blowing the preform in order to induce biaxial orientation in the solid phase. Two types of ISBM process are practised. In the single-stage process a preform is injection moulded, stretched and blown before it is allowed to cool. In the two-stage process, the injection moulded preform is allowed to cool before it is reheated, stretched and blown into a container.

ISBM processes are used to make containers such as bottles and jars having very good optical properties. Poly(ethylene terephthalate) (PET) is the most commonly used polymer for ISBM applications because PET has good processing behaviour and produces high quality bottles having good optical and barrier properties.

PET is however a relatively expensive polymer and cannot function at higher temperatures due to poor heat resistance. The skilled man is thus looking for alternatives to PET for ISBM applications.

Polypropylene is cheaper than PET and demonstrates better heat resistance than PET. In some applications, particularly when high temperature resistance is required, it would therefore be advantageous to use polypropylene instead of PET in ISBM processes. However, polypropylene has a narrow processing window when used in ISBM processes, i.e. polypropylene can be stretched and blown only over a narrow temperature range. Thus, in an industrial process, polypropylene typically possess a 4 °C processing window, often even narrower, whereas PET can be processed over a 15°C temperature range. A narrow processing window is not favourable industrially since temperature control during ISBM becomes a major issue leading to a potentially high scrap rate.

Moreover, polypropylene has poor oxygen barrier properties compared to PET which means polypropylene polymers are often laminated with well known barrier polymers to form an oxygen impermeable multilayer structure. Polypropylene does not however, bond well to barrier polymers such as ethylene vinyl alcohol or polyamides so adhesives are often used to bond the layers together. As it is desirable to have a polypropylene layer outermost, e.g. to protect the barrier layer, the resulting structure can be five layered with polypropylene outer layers sandwiching two adhesives layers and a central barrier layer.

There are, however, no commercial injection moulding machines which can handle 5 layer structures such as this so a 5 layered preform cannot be manufactured. The polymer chemist seeks therefore structures having a maximum of 3 layers.

To allow three layered structures to be ISB moulded, it is known to combine the adhesive into the polypropylene layer although this is often associated with a loss of transparency.

In EP-A-0407880, the inventors describe a container in which the adhesive and polymer are mixed in one layer to allow direct lamination to a barrier layer. A barrier material such as polyamide can also be added to the polymer layer to improve barrier properties further.

EP-A-1202914 describes an identical structure and shows also that the use of an adhesive such a maleic anhydride modified polypropylene is not associated with high haze and hence low transparency.

WO03/035368 is another application considering the merits of mixing the adhesive, especially an anhydride grafted polypropylene adhesive, into the polypropylene layer to allow direct lamination thereof onto a barrier layer such as EVOH or polyamide.

US 6884483 suggests a similar structure but employs block copolymer modified with a boronic acid precursor to provide adhesion between layers.

WO96/1953 describes plastic formulations for platelet storage containers. The containers are pouches or bags formed from a monolayer polypropylene/adhesive construction.

EP1116571 describes blow moulding products formed from thermoplastic resin and polymer fibres.

US2006/0020086 describse ionomer modified polypropylene for superior scratch resistance. Some blends with maleic anhydride modified polymers are discussed.

US5846661 describes a film of a polyamide and polyolefin for use in agriculture as a barrier to fumigants.

EP1136252describes a modified propylene composition in combination with a amorphous ethylene and styrene elastomer for use in a laminate.

The present inventors have surprisingly found that certain adhesives, in particular maleic anhydride functionalised block copolymers, are much better adhesives for polypropylene copolymers than other graft adhesives known in the art and this forms a first aspect of the invention.

A further major problem with the ISBM process for multilayer structures is, however, that the barrier layer typically has a different melting temperature than the polypropylene polymer meaning the processing window of the materials might not overlap or may overlap to a limited extent. It is important to try to maximise overlap between the processing windows of the barrier and propylene layers as they will be stretched at the same time.

As the processing window of polypropylene is very narrow anyway, this severely limits the usefulness of the ISBM process with structures in which a polypropylene layer and barrier layer are present.

There are thus many problems associated with the use of polypropylenes as an alternative to PET for ISBM.

The present inventors have been particularly addressing the problem of broadening the processing window of polypropylene in particular where a barrier layer material is present, whilst trying to maintain satisfactory optical and mechanical properties required of ISBM containers. In particular, the inventors are seeking to maximise overlap between the processing window of the barrier materials and that of the polypropylene.

The present inventors have surprisingly found that the processing window for an ISBM process can be broadened by mixing the propylene polymer with an anhydride functionalised polymer. Whilst such copolymers are well known adhesives, never before has it been noted that the adhesive has the ability to broaden the processing window of polypropylene.

The use of adhesives is thus known in the art but only in connection with increasing adhesion between barrier layers and polypropylene layers.

Thus, whilst the use of anhydride functionalised copolymers in combination with certain propylene polymers is not new, no one has realised the benefits of this combination on the processing window in an ISBM process.

Thus, viewed from one aspect, the invention provides use of an anhydride functionalised polymer to broaden the temperature range of successful stretching and blowing in the injection stretch blow moulding of polypropylene wherein said anhydride functionalised polymer is present in a weight range of 1 to 30 wt% relative to the polypropylene.

The anhydride functionalised polymer can be based on any suitable anhydride but is preferably maleic anhydride based. The graft modification of polymers with various olefinically unsaturated monomers is well known in the art and numerous commercially available graft modified maleic anhydride polymers are available.

The polymer onto which the anhydride is grafted can be any suitable polymer, preferably one which is compatible with polypropylene such as a random polypropylene copolymer or a homopolymer of polypropylene. Ideally however, the polymer is a block copolymer. Suitable block copolymers include copolymers of an aromatic vinyl compound such as styrene and at least alpha olefin or diene. Suitable alpha olefins include ethylene, propylene, isobutene and butene with suitable dienes including butadiene. Highly preferred block polymers are styrene-isobutylene block copolymers, styrene isobutylene styrene triblock polymers, styrene ethylene propylene triblock polymers or styrene ethylene butene triblock polymers (SEBS).

Most preferably, the anhydride modified polymer is maleic anhydride functionalised SEBS. Most significantly, the inventors have found that much improved adhesion between layers occurs when a maleic anhydride modified SEBS resin is used as opposed to an anhydride grafted polymer in which the polymer is polypropylene.

The amount of anhydride in the anhydride modified polymer as a whole may be 0.1 to 5 wt%, e.g. 0.2. to 3 wt%. When formulated as part of a layer in an article, the amount of anhydride present may be in the range 0.01 to 0.20%.

Anhydride modified polymer resins are well known in the art and are available commercially from various sources.

The anhydride functionalised polymer is incorporated into the polypropylene polymer in an amount in the range of about 1% to 30 %wt, more preferably from 5 to 25 wt%, most preferably from 10 to 20 wt%.

The anhydride modified polymer is added to a polypropylene polymer. By polypropylene polymer is meant a polymer in which at least 70%, preferably at least 80% by weight of the polymer comprises propylene monomer units. In one embodiment the polypropylene polymer may be a homopolymer, i.e. where substantially all, e.g. at least 99.9% wt of the monomer units are derived from propylene however copolymers of propylene are preferred. The term copolymer is used herein to cover the combination of propylene with at least one other comonomer, preferably with one comonomer only.

Preferably, the polypropylene polymer is a copolymer with at least one C₂₋₁₀-alpha-olefin comonomer such as ethylene, butene or hexene, especially ethylene. The amount of comonomer present may vary, however suitable ranges are from 1 % to 30%, preferably 2 to 8% by weight, such as between 1 to 4 wt%, especially between 2 and 3.5 wt% (relative to propylene).

Preferred polypropylene polymers for use in the invention are heterophasic block copolymers or more preferably random propylene copolymers.

The propylene polymer, whatever its nature, may have a density in the range 890-925 kg/m³ (ISO 1183), e.g. 900-920 kg/m³. It may have an MFR₂ in the range 0.05 to 50 g/10min, preferably 1 to 40 g/10min, such as 2 to 30 g/10 min, preferably 3 to 35 g/10min when measured according to ISO 1133 at 230°C and a load of 2.16 kg. In some embodiments, the MFR₂ is 6 to 30 g/10 min, most preferably 8 to 30 g/10 min, e.g. about 20 g/10 min.

The propylene polymer of use in this invention may be unimodal or multimodal. In a unimodal polypropylene its molecular weight profile comprises a single peak By multimodal, preferably bimodal, is meant that its molecular weight profile does not comprise a single peak but instead comprises the combination of two or more peaks (which may or may not be distinguishable) centred about different average molecular weights as a result of the fact that the polymer comprises two or more separately produced components, e.g. blended components or more preferably components prepared in situ. As noted above, it is believed that the use of multimodal polymers contributes to broadening the processing window of propylene polymers in ISBM processes. The inventors have shown that still further broadening can be achieved if a reheating agent is used in conjunction with a multimodal polypropylene polymer. However, whilst the invention is suitable for use with multimodal polymers, its benefits might be most striking with unimodal polymers where there is no multimodality to additional contribute to a broadened processing window.

Multimodal propylene polymers will have at least two components. These can be prepared separately and blended or prepared together, preferably in a multistage polymerisation.

Multimodal polymers of use in this invention may therefore have a composition comprising:
(A) a polypropylene homopolymer or a propylene random copolymer comprising propylene and up to 10 weight % of comonomer selected from ethylene and/or C₄₋₁₀ alpha olefin; and
(B) a random copolymer of propylene and comonomer selected from ethylene and/or C₄₋₁₀ alpha olefin.

Components A and B must be different.

The composition may contain further components if desired however, the multimodal polymer described herein preferably comprises only two polymer components, A and B.

The multimodal polymer composition may comprise 10 to 90 wt % of polymer A, preferably 30 to 70 wt %, more preferably 40 to 60 wt % and most preferably 45 to 55 wt %. Conversely therefore, the composition preferably comprises 10 to 90 wt % of polymer B, preferably 30 to 70 wt %, more preferably 40 to 60 wt % and most preferably 45 to 55 wt %.

Polymer A preferably comprises up to 3.5 wt % comonomer, more preferably up to 2.5 wt % comonomer. Where polymer A is copolymeric, the comonomer is preferably ethylene. The comonomer in polymer (B) is preferably ethylene.

Such multimodal polymers may be prepared by simple blending, by two or more stage polymerisation or by the use of two or more different polymerisation catalysts in a one stage polymerisation. Preferably however they are produced in a two-stage polymerisation using the same catalyst, e.g. a metallocene catalyst or preferably a Ziegler-Natta catalyst, in particular a slurry polymerisation in a loop reactor followed by a gas phase polymerisation in a gas phase reactor. Conventional cocatalysts, supports/carriers, electron donors etc. can be used.

A loop reactor - gas phase reactor system is marketed by Borealis A/S, Denmark as a BORSTAR reactor system. The polymer of the invention is thus preferably formed in a two stage process comprising a first slurry loop polymerisation followed by gas phase polymerisation in the presence of a Ziegler-Natta catalyst.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerisation may if desired be effected under supercritical conditions.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with the monomer (i.e. propylene and ethylene when required).

Preferably, component A of the polymer of the invention is produced in a continuously operating loop reactor where propylene (and comonomer when required) are polymerised in the presence of a polymerisation catalyst as stated above and a chain transfer agent such as hydrogen. The diluent is typically an inert aliphatic hydrocarbon, preferably isobutane or propane.

Component B can then be formed in a gas phase reactor using the same catalyst. Prepolymerisation can be employed as is well known in the art. Ziegler-Natta catalysts are preferred. The nature of the Ziegler-Natta catalyst is described in numerous prior publications, e.g. US 5234879.

Alternatively, the polymers of the invention can be made by blending two random copolymers of propylene or by blending one random copolymer with a polypropylene homopolymer in a conventional blending apparatus.

Unimodal polymers can be made using a one stage process e.g. using the parameters above for slurry and gas phase processes. Catalysts employable are the same as those utilised to manufacture multimodal polymers.

Random copolymers of propylene and propylene homopolymers of use in this invention are commercially available from various suppliers, e.g. Borealis A/S.

In addition, the polymers can be mixed with minor amounts of standard polymer additives such as polymer processing agent, nucleating agents, antioxidants, reheat agents, UV stabilisers, clarifying agents etc.

Whilst the use of anhydride functionalised polymers in combination with polypropylene is not new, certain combinations of these components are new and allow the formation of new articles which form a further aspect of the invention.

The use of the maleic anhydride functionalised polymer also improves impact properties.

The article of this embodiment may be a film but is preferably a moulded article such as an injection, moulded or blow moulded article especially a ISBM article.

Of course the anhydride functionalised polymer can also be used in three layered articles.

Viewed from another aspect the invention provides a three layer moulded article comprising:
(I) a first layer comprising a random polypropylene copolymer and 1 to 30 wt% of a maleic anhydride modified SEBS;
(II) a second layer comprising an oxygen barrier material; and
(III) a third layer comprising a random polypropylene copolymer and 1 to 30 wt% of a maleic anhydride modified SEBS.

It is also within the scope of the invention for the layers above to contain other alpha olefin polymers.

In the three layer construction, the first and third layers can be different but they are preferably the same. The polypropylenes used in these layers are described above.

It will be appreciated that by three layer article is meant that the body (i.e. walls, sides, base etc) of the article are three layered.

Oxygen barrier materials are well known in the art. Commonly used oxygen barrier materials are ethylene vinyl alcohol (EVOH) or polyamides such as nylon. Mixtures of oxygen barrier materials could also be used.

Preferably, the second layer in either construction above consists essentially of the oxygen barrier material (i.e. contains this material and no other substantial component). It will be appreciated that standard additives may still be present.

The articles described above are preferably manufactured using ISBM.

The use of the anhydride functionalised polymer in conjunction with polypropylene allows better adhesion of the barrier layer to the polypropylene layer than other similar structures where the anhydride functionalised polymer is grafted onto a polypropylene polymer. Thus, delamination of a barrier layer from a layer comprising the anhydride functionalised SEBS and polypropylene is much less likely than with a corresponding anhydride functionalised polypropylene and polypropylene blend.

Moreover, the use of the anhydride functionalised polymer broadens the processing window for the composition in an ISBM process. By broadening the processing window is meant therefore that the temperature range at which the polypropylene preform comprising the anydride functionalised polymer can be successfully stretched and blow moulded in the ISBM process is broader than for an otherwise identical preform without anhydride functionalised polymer added.

The processing window is measured by an ISBM simulation test. In the ISBM simulation test, the processing window is that for biaxial stretching of injection moulded plaques or cast films and is defined as the difference between the Max. temp and Min. temp wherein:
Max. temp = the temperature at which a maximum stretching force of 10N is required to stretch the polymer (at maximum stretching force less than 10N, areas of melted polymer are visible on the sample)
Min. temp = the lowest temperature at which stretching of the polymer is possible without polymer failure

The test is described in the Examples and is carried out as follows for injection moulded plaques. Boxes of 35 cm x 15 cm x 10 cm, with a thickness of 2mm are injection moulded at Netstal 1570/300 MPS injection moulding machine at 230°C with an injection speed of 100 mm/s, a holding pressure to 315 grams product weight of box and a holding time of 12 s. Dosing at backpressure of 100 bar and 150 rpm. The mould temperature is 30°C on injection side and 15°C on clamping side. The cooling time is 15 s.

From the bottom of these boxes plaques of about 86mm x 86mm x 2mm are cut for biaxial drawing in a laboratory film stretcher KARO IV (Brückner Maschinenbau GmbH, Siegsdorf, Germany).

Cast films, made as described in the examples, can also be used to determine the processing window. For either the case films or plaques, these are heated in a heating chamber by IR radiation, for 120s before drawing. The stretch speed is 35m/min. with a stretch ratio of 3.5 x 3.5 to achieve a thickness reduction of 10x (e.g. from 2 mm to 0.2mm). During biaxial drawing the stretching force as a function of time is recorded.

The temperature range over which the sample can be stretched without producing visible failures is the processing window. Temperatures that are too low for stretching cause polymer failure. Temperatures that are too high for stretching cause the polymer to melt and/or lead to visible variations in the thickness of the blown articles.

It will be appreciated that as the polymer is stretched at a constant speed, the stretching force required to stretch the plaque or film will vary as different temperatures are used. Higher temperatures mean a more easily stretched polymer. However, if the force required to stretch the polymer drops below 10N, areas of melted polymer are visible on the sample. Thus, the higher end of the processing window in this test is defined as the temperature at which a force of 10N is required to stretch the polymer.

The equipment needed to determine the processing window is described in detail in the examples but will be known to the skilled man.

The processing window measured as described above should be at least 20°C, e.g. at least 25°C, preferably at least 30°C. The processing window should be broadened by at least 10°C, preferably at least 12°C, e.g. at least 14°C, especially at least 15°C.

It is preferred if, irrespective of the size of the plaque or film from which the processing window is measured, the processing window is broadened by at least 20%, e.g. at least 30%, preferably at least 40%, especially at least 50%, most especially at least 75%.

It is also a surprising feature of the invention that the presence of the anhydride functionalised polymer reduces the temperature at which processing can begin. The whole processing window is not only broadened therefore but shifted to lower temperature. The use of lower temperatures for the stretch blow moulding phase of the ISBM process is highly desirable and this takes the temperature of the drawing process further from the melting temperature of any of the polymers which are used to form ISBM articles.

In a further preferred embodiment therefore, the temperature at which processing can successfully begin (i.e. the lowest temperature in the processing window) is reduced by at least 10°C, such as at least 15°C, preferably at least 20°C relative to a polymer without the anhydride functionalised polymer.

The anhydride functionalised polymer is preferably used in conjunction with polypropylene for the manufacture of injection stretch blow moulded articles. Injection stretch blow moulding is a known process which involves certain steps. First, a monolayer or multilayer preform is injection moulded by the injection of a polypropylene composition containing the anhydride functionalised polymer or by the co-injection of a polypropylene composition containing the anhydride functionalised polymer and a composition containing the barrier layer material. Co-injection nozzles suitable for the preparation of 3-layer preforms are known in the art. The barrier material will form the core layer in the multilayer preform with, typically identical, polypropylene/anhydride layers external on the preform.

The compositions are heated to melt them to form a flowable polymer melt that is introduced by injection into the mould. The injection mould has a cavity and a mating ram to form the preform into the desired shape, e.g. one having threaded neck portion and a bottle body portion. The preform can then be removed from the mould, cooled and stored until it is ready to be formed into an article or the preform can be stretched and blown straight away.

In the reheating operation, when the preform reaches the desired temperature, the reheated preform is then ready for stretch blow moulding. The preform is placed within a suitably shaped mould and a gas, such as air or nitrogen, is injected into the internal volume of the preform through a nozzle as a push rod forces the polypropylene composition to expand outwardly to fill the mould. This is the stretching and blowing stage of the process where the processing window of the material is narrow for polymer compositions without anhydride functionalised polymer.

During this step the material becomes biaxially oriented which improves the physical and optical properties of the article, as well as improving the barrier properties.

The stretching temperatures used are normally between 90°C and 160 °C, e.g. 130°C. Stretching speeds may range from 20 to 60 m/min in both TD and MD.

Control of the temperature of the polymer during the biaxial stretching step is critical. If the temperature is too high the stretched polymer will include areas of melted polymer, which reduces the molecular orientation, and will show variation in sample thickness. If the temperature is too low it will not be possible to biaxially stretch the polymer without the polymer failing. By broadening the processing window for any given polymer composition, the temperature range over which the polymer can in practice be biaxially stretched is widened.

Viewed from another aspect the invention provides a process for the formation of an article comprising:
(I) mixing at least one maleic anhydride modified SEBS with a random polypropylene copolymer and extruding the resulting mixture;
(II) co-injecting the extrudate from step (I) and a barrier layer composition, e.g. EVOH or Nylon, to form a 3-layer preform in which the barrier layer composition forms a core layer and the extrudate forms the outer layers;
(III) allowing the preform to cool;
(IV) reheating the preform to a temperature in the range 90 to 160°C; and
(V) stretching and blowing the preform to form an article
wherein said anhydride functionalised polymer forms 1 to 30 wt% of a layer where it is present

Viewed from another aspect the invention provides a process for the formation of an article comprising:
(I) mixing at least one maleic anhydride modified SEBS with a random polypropylene copolymer and extruding the resulting mixture;
(II) co-injecting the extrudate from step (I) and a barrier layer composition, e.g. EVOH or Nylon, to form a 3-layer preform in which the barrier layer composition forms a core layer and the extrudate forms the outer layers; and
(III) stretching and blowing the preform to form an article without allowing the to cool
wherein said anhydride functionalised polymer forms 1 to 30 wt% of a layer where it is present.

Viewed from another aspect the invention therefore provides a process for the formation of an article comprising:
(I) mixing at least one maleic anhydride modified SEBS with a random polypropylene copolymer and extruding the resulting mixture;
(II) injecting the extrudate from step (I) to form a preform; optionally
(III) allowing the preform to cool and reheating the preform to a temperature in the range 90 to 160°C; and
(IV) stretching and blowing the preform to form an article
wherein said anhydride functionalised polymer forms 1 to 30 wt% of a layer where it is present.

The anhydride may be combined with the polypropylene polymer in an convenient fashion. As one alternative, the anhydride may be directly mixed with the polypropylene prior to introducing the mixture to an injection mould to form the preform. Preferably however, the anhydride is mixed with the polypropylene prior to extrusion and thus extruded with the polypropylene forming a homogeneous polypropylene composition.

The present invention provides a method of making polypropylene containers, such as bottles, and other polypropylene articles. Preferred articles are bottles, e.g. of 100 ml to 10 L in volume, e.g. 300 ml or 500 ml.

It has been found that the inclusion of anhydride functionalised polymers into the articles of the invention has limited affect on the haze properties of the formed articles. Haze values of less than 20% are therefore readily obtainable.

The invention will now be described further with reference to the following non-limiting examples and Figures.

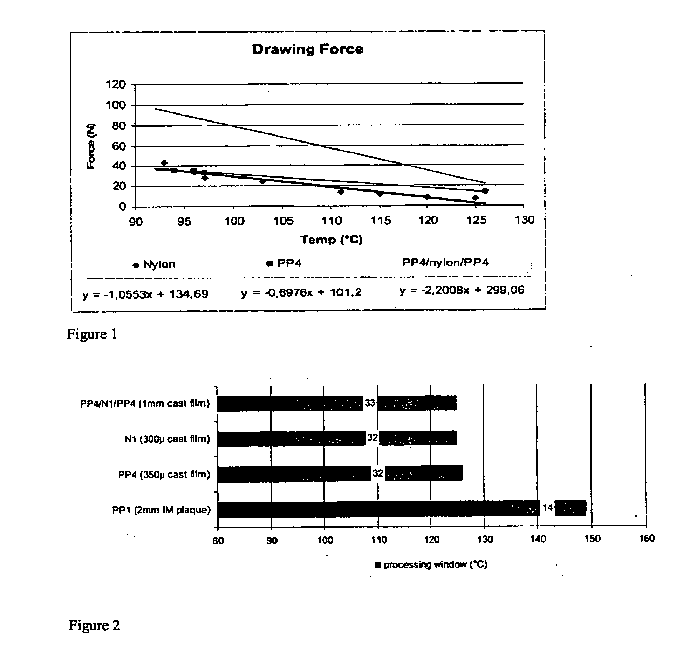

Figure 1 shows the drawing force as a function of temperature for various compositions of the invention. Figure 2 shows the processing window for various compositions of the invention.

### Analytical Tests

Values quoted in the description/examples are measured according to the following tests:

Melt flow rate (MFR), i.e. MFR₂, was measured according to ISO 1133 at 230°C and a load of 2.16 kg.

Comonomer content was determined in a known manner based on FTIR measurements calibrated with C¹³NMR.

Density is measured according to ISO 1183

SEC: The molecular weights and molecular weight distributions of polymers were determined with A Millipore Waters ALC/GPC operating at 135 °C and equipped with two mixed bed and one 107 Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes.

### Polymer Materials used and Preparation thereof:

The following materials were used in the Examples:
**PP1:** A unimodal random copolymer of propylene and ethylene having a ethylene content of 3.3 wt% and an MFR₂ of 20 g/10min
**PP2:** A unimodal random copolymer of propylene and ethylene having a ethylene content of 3.3 wt% and an MFR₂ of 20 g/10min and 10% of a maleic anhydride modified polypropylene (Bynel 50E571).
**PP3:** A unimodal random copolymer of propylene and ethylene having a ethylene content of 3.3 wt% and an MFR₂ of 20 g/10min and 10 % maleic anhydride modified styrene ethylene butene block copolymer (Tuftec H1221).
**PP4:** A unimodal random copolymer of propylene and ethylene having a ethylene content of 3.3 wt% and an MFR₂ of 20 g/10min and 20 % maleic anhydride modified styrene ethylene butene block copolymer (Tuftec H1221).
**N1 -** Nylon MXD6 from Mitsuibishi
**E1 -** EVOH (Trade Name Eval F104B)

These materials were formed into various films/plaques based on the following protocols:

### Compounding:

The blends of polymers in PP2, PP3 and PP4 were prepared by physical mixing of the described compositions for 3 minutes, followed by compounding in a Prism 24 mm double screw extruder at the conditions:
Set temperature: 230°C (melt temperature 250°C)
N₂ pressure: 1.5 bars
Speed: 300 rpm
Die Pressure: 80 bars

### Injection Moulded Plaques:

Injection moulded plaques were prepared by injection moulding boxes of 35 cm x 15 cm x 10 cm, with a thickness of 2mm at Netstal 1570/300 MPS injection moulding machine at 230°C with an injection speed of 100 mm/s, a holding pressure to 315 grams product weight of box and a holding time of 12 s. Dosing at backpressure of 100 bar and 150 rpm. The mould temperature was 30°C on injection side and 15°C on clamping side. The cooling time was 15 s. From the bottom of these boxes, plaques of about 86mm x 86mm x 2mm were cut for biaxial drawing.

### Cast Films:

Cast films of PP4, N1 and E1 were produced by a chill roll casting process at thicknesses and extruder processing conditions as given in Table 1. The chill roll speed was 1 m/min with inlet water temperature of 20°C.

**Table 1. Processing conditions of cast films**

| Sample | Extruder temperature settings | | | | Die temp. | Screw speed | Pressure | film thickness |
|---|---|---|---|---|---|---|---|---|
| | (°C) | (°C) | (°C) | (°C) | (°C) | (rpm) | (bar) | (µm) |
| PP4 | 160 | 210 | 220 | 240 | 240 | 20 | 53 | 350 |
| N1 | 240 | 250 | 260 | 260 | 265 | 20 | 50 | 350 |
| E1 | 180 | 205 | 220 | 215 | 215 | 22 | 60 | 300 |

A further cast film was produced by a chill roll casting process at extruder processing conditions as given in Table 2. The film was produced as a three layer film with N1 in the core layer and PP4 in the skin layers, and N1 in extruder 1 and PP4 in extruder 2. This film is designated M1 (PP4/N1/PP4). The chill roll speed was 1 m/min with inlet water temperature of 20°C. Die temp was 245°C, screw speed 20 rpm and pressure 53 bar.

**Table 2. Processing conditions of multilayer cast film**

| | Extruder 1 temperature settings | | | | Extruder 2 temperature settings | | | | film thickness µm. |
|---|---|---|---|---|---|---|---|---|---|
| | (°C) | (°C) | (°C) | (°C) | (°C) | (°C) | (°C) | (°C) | |
| M1 | 250 | 260 | 260 | 250 | 160 | 210 | 220 | 240 | 340/290/340 |

### Biaxial Orientation of Plaques, Films

Biaxial oriented samples were formed from cast films or injection moulded plaques prepared by the techniques above. The biaxial oritentation process involved biaxial drawing in a laboratory film stretcher KARO IV (Brückner Maschinenbau GmbH, Siegsdorf, Germany) at VTT, Tampere, Finland. The plaques/films were heated in a heating chamber by IR radiation, for a defined period of time 120s before drawing. To simulate as much as possible the ISBM process, the maximum stretch speed of 35m/min was used. The stretch ratio of 3.5 x 3.5 was selected in order to achieve a 10 times thickness reduction, e.g. from 2 mm to 0.2mm (same as in ISBM process). During the simultaneous drawing, force elongation curves were recorded in the machine direction and in the transverse direction.

For each sample the temperature range over which the sample could be stretched without producing visible failures was studied (the processing window).

### Example 1

### Biaxial drawing of cast films (Simulation of ISBM)

350 micron cast films of various polymer samples were prepared as described above. Samples of 86mm x 86mm were cut from the cast films for biaxial drawing in a laboratory film stretcher KARO IV (Brückner Maschinenbau GmbH, Siegsdorf, Germany) at VTT, Tampere, Finland. The films were heated in a heating chamber by IR radiation, for 120s before drawing. To simulate as much as possible the ISBM process, the maximum stretch speed of 35m/min was used. The stretch ratio of 3.5 x 3.5 was selected in order to achieve a thickness reduction from 1 mm to 0.1mm (same as in ISBM process). During the simultaneous drawing, force elongation curves were recorded in the machine direction and in the transverse direction.

For each sample the temperature range over which the sample could be stretched without producing visible failures was studied (the processing window).

The results for two monolayer films are presented in Figure 1 and show that the biaxial drawing of Nylon and PP4 are very similar. Figure 1 also shows that a multilayer film M1 (PP4/N1/PP4) was stretchable in the same processing window. The higher forces required to stretch M1 are simply a reflection of the thickness of the sample used (1 mm for the multilayer film, around 0.35 mm for the monolayer films).

### Example 2

### Processing Window

Figure 2 shows the actual processing window of the polymers tested using the biaxial drawing method of Example 1 on the cast films and plaques specfied in the Figure.

### Example 3

### Adhesion

Various three layer (A/B/A) films were prepared to test delamination. The films were produced by a chill roll casting process with either E1 or N1 (polymer B in extruder 1) in the core layer and PP1, PP2, PP3 or PP4 (polymer A in extruder 2) in the skin layers

Coextrusion was effected using the following protocols

**Table 3**

| **Polymer temperature profiles:** | | | | | |
|---|---|---|---|---|---|
| | **Recommended Extruder temp.** | | | | |
| | **Polymer** | **Zone 1** | **Zone 2** | **Zone 3** | **Zone 4** |
| | | **(°C)** | **(°C)** | **(°C)** | **(°C)** |
| Ext. no.1 | **E1** | 180 | 210 | 220 | 230 |
| Ext. no.1 | **N1** | 240 | 260 | 260 | 250 |
| Ext. no.2 | **PP** | 160 | 210 | 220 | 240 |

**Table 4**

| Polymer B | Polymer A | Die Temp (°C) | Screw Speed (rpm) | Pressure (bar) | Film µm (A/B/A) |
|---|---|---|---|---|---|
| E1 | PP1 | 230 | 23 | 80 | 500/600/500 |
| E1 | PP2 | 230 | 22 | 60 | 400/360/400 |
| E1 | PP3 | 230 | 22 | 60 | 480/270/480 |
| E1 | PP4 | 230 | 22 | 60 | 360/250/360 |
| N1 | PP1 | 245 | 20 | 50 | 360/250/360 |
| N1 | PP2 | 245 | 20 | 50 | 400/320/400 |
| N1 | PP3 | 245 | 20 | 50 | 430/340.430 |
| N1 | PP4 | 245 | 20 | 53 | 340/290/340 |

The resulting films were inspected and if the different layers were delaminated then the Adhesion value = 0 was assigned and if no visible sign of delamination then Adhesion value = 3 was assigned. Most of the prepared multilayer films showed no adhesion between the different layers, as shown in Table 5.

**Table 5**

| | | Adhesion | |
|---|---|---|---|
| E1 | PP1 | 0 | 3 = best adhesion |
| E1 | PP2 | 0 | |
| E1 | PP3 | 1 | |
| E1 | PP4 | 2 | |
| N1 | PP1 | 0 | |
| N1 | PP2 | 0 | |
| N1 | PP3 | 1 | |
| N1 | PP4 | 3 | |

Table 5 Adhesion properties of different multilayer cast films

In summary PP random (PP1) and blend PP2 did not create any adhesion with EVOH or Nylon. Compounds PP3 and PP4 were better and these compounds work better with nylon than EVOH.

### Example 4

### Oxygen Permeability

The following materials were used:

**Table 6. Material tested**

| | **Thickness** | |
|---|---|---|
| **Sample** | **(µm)** | |
| 1. PP1 | 150 | biaxial oriented from 2mm IM-plaque |
| 2. PP4a | 350 | cast film |
| 3. PP4b | 40 | biaxial oriented from 350µ cast film |
| 4. N1a | 350 | cast film |
| 5. N1b | 30 | biaxial oriented from 350µ cast film |
| 6. E1 | 300 | cast film |
| 7. M1 | 110 | PP4/N1/PP4 - biaxial oriented from 1,1 mm cast film |

The oxygen permeability of the films listed in Table 1 was tested according to BTM 14443. The test gas was 100% O₂ for all samples except sample 3, then 21 % oxygen was used. Results are presented in Tables 7 and 8.

**Table 7. Oxygen transmission rate (OTR) at 23°C**

| **Sample** | **thickness** | |
|---|---|---|
| | **(µm)** | **O2-tr. [cc/m²*24h]** |
| 1. PP1 | 150 | 548 |
| 2.PP4a | 350 | 410 |
| 3. PP4b | 40 | 3453 |
| 4. N1 | 350 | 0,02 |
| 5. N1 | 30 | 4,3 |
| 6. E1 | 300 | 0,02 |
| 7. M1 | 110 | 3,85 |

**Table 8, Oxygen transmission rate (OTR) all recalculated to 20µ films (*20µ Nylon layer in the PP/Nylon/PP multilayer film)**

| **Sample** | |
|---|---|
| | **O2-tr. [cc/m^{2*}24h]** |
| 1. PP1 | 4100 |
| 2.PP4a | 7200 |
| 3.PP4b | 7000 |
| 4. N1 | 0,4 |
| 5. N1 | 7 |
| 6. E1 | 0,3 |
| 7. M1* | 6 |

The best results are shown for cast films of Nylon (N1) and EVOH (E1), as expected. By orientation of the Nylon film the thickness reduces and the oxygen transmission rate increases (N1).

For the anhydride modified sample (PP4) the OTR increases almost linearly by the thickness decrease as shown by the equal OTR values of PP4a and PP4b in Table 8. The OTR values of PP 1 are lower than those of PP4 as shown in table 8. The most interesting results are the oxygen transmission rates of the PP/Nylon/PP biaxial oriented film (M1). From the literature (Packag.Technol.Sci. 2003, 16, 149-158) oxygen transmission rates 20 - 50 times lower in PET compared with PP are shown. In this study the OTR values of the 110µ oriented multilayer PP/Nylon/PP film is 140 times lower than the OTR values of the 150µm oriented PP film (Table 7). Recalculating the OTR values of PP 1 to a thickness of 110 µm gives ratio of 190. It means that the multilayer sample 7 has better oxygen barrier properties than PET.

### Example 5

Haze values of the biaxial oriented films, PP1 and M1 were measured according to method ASTM D2003, with the results shown in table 9.

**Table 9**

| | **Thickness** | **Haze** |
|---|---|---|
| **Sample** | **(µm)** | **value (%)** |
| 1. PP1 | 150 | 4,0 |
| 7. M1 | 110 | 3,8 |

These results show very good optical properties of M1 and that the multilayer structure of M1 has a minor effect on haze compare with the clarified PP random copolymer PP 1.

## Claims

1. Use of an anhydride functionalised polymer to broaden the temperature range of successful stretching and blowing in the injection stretch blow moulding of polypropylene wherein said anhydride functionalised polymer is present in a weight range of 1 to 30 wt% relative to the polypropylene.

2. A three layer moulded article comprising:
(I) a first layer comprising a random polypropylene copolymer and 1 to 30 wt% of a maleic anhydride modified SEBS;
(II) a second layer comprising an oxygen barrier material; and
(III) a third layer comprising a random polypropylene copolymer and 1 to 30 wt% a maleic anhydride modified SEBS.

3. An article as claimed in claim 2 wherein said random polypropylene copolymer is a unimodal propylene ethylene copolymer.

4. An article as claimed in any one of claims 2 to 3 wherein said anhydride functionalised polymer forms 10 to 20 wt% of a layer where it is present.

5. A process for the formation of an article comprising:
(I) mixing at least one maleic anhydride modified SEBS with a random polypropylene copolymer and extruding the resulting mixture;
(II) co-injecting the extrudate from step (I) and a barrier layer composition, e.g. EVOH or Nylon, to form a 3-layer preform in which the barrier layer composition forms a core layer and the extrudate forms the outer layers;
(III) allowing the preform to cool;
(IV) reheating the preform to a temperature in the range 90 to 160°C; and
(V) stretching and blowing the preform to form an article;
wherein said anhydride functionalised polymer forms 1 to 30 wt% of a layer where it is present.

6. A process for the formation of an article comprising:
(I) mixing at least one maleic anhydride modified SEBS with a random polypropylene copolymer and extruding the resulting mixture;
(II) co-injecting the extrudate from step (I) and a barrier layer composition, e.g. EVOH or Nylon, to form a 3-layer preform in which the barrier layer composition forms a core layer and the extrudate forms the outer layers; and
(III) stretching and blowing the preform to form an article without allowing the to cool;
wherein said anhydride functionalised polymer forms 1 to 30 wt% of a layer where it is present.

7. A process for the formation of an article comprising:
(I) mixing at least one maleic anhydride modified SEBS with a random polypropylene copolymer and extruding the resulting mixture;
(II) injecting the extrudate from step (I) to form a preform; optionally
(III) allowing the preform to cool and reheating the preform to a temperature in the range 90 to 160°C; and
(IV) stretching and blowing the preform to form an article;
wherein said anhydride modified polymer is incorporated into the propylene polymer in an amount in the range of 1 to 30 wt%.

## Patentansprüche

1. Verwendung eines mit Anhydrid funktionalisierten Polymers, um den Temperaturbereich des erfolgreichen Streckens und Blasens beim Einspritz-Streckblasen von Polypropylen zu erweitern, wobei das mit Anhydrid funktionalisierte Polymer im Verhältnis zum Polypropylen in einem auf das Gewicht bezogenen Bereich von 1 bis 30 Gew.-% vorliegt.

2. Dreischichtiger Formgegenstand, umfassend:
(I) eine erste Schicht, die ein statistisches Polypropylencopolymer und 1 bis 30 Gew.-% eines mit Maleinsäureanhydrid modifizierten SEBS umfaßt;
(II) eine zweite Schicht, die ein Sauerstoffsperrmaterial umfaßt; und
(III) eine dritte Schicht, die ein statistisches Polypropylencopolymer und 1 bis 30 Gew.-% eines mit Maleinsäureanhydrid modifizierten SEBS umfaßt

3. Gegenstand nach Anspruch 2, wobei das statistische Polypropylencopolymer ein unimodales Propylen-Ethylen-Copolymer ist.

4. Gegenstand nach einem der Ansprüche 2 bis 3, wobei das mit Anhydrid funktionalisierte Polymer, wenn es vorliegt, 10 bis 20 Gew.-% einer Schicht ausmacht.

5. Verfahren zum Herstellen eines Gegenstandes, umfassend:
(I) Mischen von zumindest einem mit Maleinsäureanhydrid modifizierten SEBS mit einem statistischen Polypropylencopolymer und Extrudieren des entstandenen Gemischs;
(II) gleichzeitiges Einspritzen des Extrudats vom Schritt (I) und einer Zusammensetzung für eine Sperrschicht, z.B. EVOH oder Nylon, so daß eine dreischichtige Vorform erzeugt wird, bei der die Zusammensetzung für die Sperrschicht eine Kernschicht und das Extrudat die äußeren Schichten bilden;
(III) Abkühlenlassen der Vorform;
(IV) erneutes Erwärmen der Vorform auf eine Temperatur im Bereich von 90 bis 160°C; und
(V) Strecken und Blasen der Vorform, so daß ein Gegenstand erzeugt wird;
wobei das mit Anhydrid funktionalisierte Polymer, wenn es vorliegt, 1 bis 30 Gew.-% einer Schicht ausmacht.

6. Verfahren zum Herstellen eines Gegenstandes, umfassend:
(I) Mischen von zumindest einem mit Maleinsäureanhydrid modifizierten SEBS mit einem statistischen Polypropylencopolymer und Extrudieren des entstandenen Gemischs;
(II) gleichzeitiges Einspritzen des Extrudats vom Schritt (I) und einer Zusammensetzung für eine Sperrschicht, z.B. EVOH oder Nylon, so daß eine dreischichtige Vorform erzeugt wird, bei der die Zusammensetzung für die Sperrschicht eine Kernschicht und das Extrudat die äußeren Schichten bilden;
(III) Strecken und Blasen der Vorform, so daß ein Gegenstand erzeugt wird, ohne daß das Abkühlen zugelassen wird;
wobei das mit Anhydrid funktionalisierte Polymer, wenn es vorliegt, 1 bis 30 Gew.-% einer Schicht ausmacht.

7. Verfahren zum Herstellen eines Gegenstandes, umfassend:
(I) Mischen von zumindest einem mit Maleinsäureanhydrid modifizierten SEBS mit einem statistischen Polypropylencopolymer und Extrudieren des entstandenen Gemischs;
(II) Einspritzen des Extrudats vom Schritt (I), so daß eine Vorform erzeugt wird; gegebenenfalls
(III) Abkühlenlassen der Vorform und erneutes Erwärmen der Vorform auf eine Temperatur im Bereich von 90 bis 160°C; und
(IV) Strecken und Blasen der Vorform, so daß ein Gegenstand erzeugt wird;
wobei das mit Anhydrid modifizierte Polymer in einer Menge im Bereich von 1 bis 30 Gew.-% in das Propylenpolymer eingebracht wird.

## Revendications

1. Utilisation d'un polymère fonctionnalisé par un anhydride pour élargir la plage de températures permettant de réussir l'étirage et le soufflage dans le moulage par injection étirage soufflage de polypropylène, ledit polymère fonctionnalisé par un anhydride étant présent dans une plage de poids de 1 à 30 % en poids par rapport au polypropylène.

2. Article moulé à trois couches, qui comprend :
(I) une première couche comprenant un copolymère statistique de polypropylène et de 1 à 30 % en poids d'un SEBS modifié par l'anhydride maléique ;
(II) une deuxième couche comprenant un matériau formant barrière à l'oxygène ; et
(III) une troisième couche comprenant un copolymère statistique de polypropylène et de 1 à 30 % en poids d'un SEBS modifié par l'anhydride maléique.

3. Article selon la revendication 2, dans lequel ledit copolymère statistique de polypropylène est un copolymère de propylène et d'éthylène unimodal.

4. Article selon l'une quelconque des revendications 2 à 3, dans lequel ledit polymère fonctionnalisé par un anhydride forme de 10 à 20 % en poids d'une couche lorsqu'il est présent.

5. Procédé de formation d'un article, qui comprend :
(I) le mélange d'au moins un SEBS modifié par l'anhydride maléique avec un copolymère statistique de polypropylène et l'extrusion du mélange obtenu ;
(II) la co-injection de l'extrudat de l'étape (I) et d'une composition formant couche barrière, par exemple d'EVOH ou de Nylon, pour former une préforme à 3 couches dans laquelle la composition formant couche barrière forme une couche centrale et l'extrudat forme les couches extérieures ;
(III) le fait de permettre à la préforme de refroidir ;
(IV) le réchauffage de la préforme à une température dans la plage de 90 à 160°C : et
(V) l'étirage et le soufflage de la préforme pour former un article ;
ledit polymère fonctionnalisé par un anhydride formant de 1 à 30 % en poids d'une couche lorsqu'il est présent.

6. Procédé de formation d'un article, qui comprend :
(I) le mélange d'au moins un SEBS modifié par l'anhydride maléique avec un copolymère statistique de polypropylène et l'extrusion du mélange obtenu ;
(II) la co-injection de l'extrudat de l'étape (I) et d'une composition formant couche barrière, par exemple d'EVOH ou de Nylon, pour former une préforme à 3 couches dans laquelle la composition formant couche barrière forme une couche centrale et l'extrudat forme les couches extérieures ; et
(III) l'étirage et le soufflage de la préforme pour former un article sans laisser la préforme refroidir :
ledit polymère fonctionnalisé par un anhydride formant de 1 à 30 % en poids d'une couche lorsqu'il est présent.

7. Procédé de formation d'un article, qui comprend :
(I) le mélange d'au moins un SEBS modifié par l'anhydride maléique avec un copolymère statistique de polypropylène et l'extrusion du mélange obtenu ;
(II) l'injection de l'extrudat de l'étape (I) pour former une préforme ; facultativement
(III) le fait de permettre à la préforme de refroidir et le réchauffage de la préforme à une température dans la plage de 90 à 160°C ; et
(IV) l'étirage et le soufflage de la préforme pour former un article ;
ledit polymère fonctionnalisé par un anhydride est incorporé avec le copolymère de polypropylène dans une quantité dans la plage de 1 à 30% en poids.
